# EUROPEAN PATENT APPLICATION

(11) **EP 2 428 906 A1**
(43) Date of publication of application: **14.03.2012**
(21) Application number: 11192644.0
(22) Date of filing: 12.07.2010
(51) Int. Cl.: G06F 17/30, G06F 21/00

(54) **Temporary policies in a mobile computing device**

(62) Divisional of application: 10169223.4
(71) Applicant: Research in Motion Limited, Waterloo, Ontario N2L 3W8 (CA)
(72) Inventor: Courtney Sean, Alexander, Waterloo, Ontario N2L 5Z5 (CA); Jackson, Eli, Omen, Waterloo, Ontario N2L 5Z5 (CA); Takacs, Kristof, Waterloo, Ontario N2L 5Z5 (CA)
(74) Representative: MERH-IP Matias Erny Reichl Hoffmann

(57) **Abstract**

A system, method and apparatus for enabling temporary policies in a mobile computing device are provided. Data representative of the temporary policies is received, the data comprising a time period for applying the temporary policies. Settings of the mobile computing device are automatically changing from original settings to temporary settings, the temporary settings based on the data. When the time period has expired, the settings are changed back to the original settings.

## Description

### FIELD

The specification relates generally to computer security, and specifically to a method, system and apparatus for enabling temporary policies in a mobile computing device.

### BACKGROUND

When a visitor arrives at an organization they are not a part of there is no way to determine whether their mobile/handheld computing device conforms to an IT (information technology) protocol of the organization. For example, many organizations have a no camera policy on-site. As a result many organizations will choose to ask the visitor that they leave their mobile computing device at a security desk, or leave if off site rather than risk the mobile computing device behaving contrary to their IT policy (e.g. such as taking pictures with an integrated camera device).

### SUMMARY

A first aspect of the specification provides a method for enabling temporary policies in a mobile computing device, the method comprising: receiving data representative of the temporary policies, the data comprising a time period for applying the temporary policies; automatically changing settings of the mobile computing device from original settings to temporary settings, the temporary settings based on the data; and, when the time period has expired, changing the settings back to the original settings.

The data can further comprise at least one of: the temporary settings; a security certificate for verifying authenticity of the temporary policies; a visual representation of the temporary policies; an image encoded with the temporary policies a barcode; and, a textual representation of the temporary policies.

Receiving the data representative of the temporary policies can comprise at least one of: receiving the data via a camera device at the mobile computing device; receiving the data via a near field communication link; receiving the data via a communication network; receiving the data via an e-mail; and, receiving the data via an input device.

The method can further comprise, prior to the automatically changing settings of the mobile computing device from the original settings to the temporary settings, at least one of: verifying the temporary policies at the mobile computing device; verifying that the temporary policies are to be implemented at the mobile computing device; providing an indication of the temporary policies at a display of the mobile computing device; receiving input data indicative that the temporary policies are to be implemented at the mobile computing device; and receiving and verifying a password at the mobile computing device.

The method can further comprise providing, at a display of the mobile computing device, at least one of: a timer indicative of time remaining in the time period; and an indicator that the temporary policies are in effect at the mobile computing device.

The time period can be infinite and the method further can comprise receiving temporary policy removal data for triggering the changing the settings back to the original settings.

The method can further comprise implementing a temporary policy application at the mobile computing device, the temporary policy application for causing the automatically changing settings of the mobile computing device from original settings to temporary settings and the changing the settings back to the original settings when the time period has expired. The data further can comprise the temporary policy application.

The method can further comprise: performing at least one of a security wipe and a factory reset at the mobile computing device; and maintaining the temporary settings after at least one of the security wipe and the factory reset.

The data can be received from a computing device associated with an organization implementing the temporary policies.

A second aspect of the specification provides a mobile computing device for enabling temporary policies. The mobile computing device comprises: a processing unit interconnected with a memory device and a communication interface, the processing unit enabled to: receive data representative of the temporary policies, the data comprising a time period for applying the temporary policies; automatically changing settings of the mobile computing device from original settings to temporary settings, the temporary settings based on the data; and, when the time period has expired, changing the settings back to the original settings.

The data can further comprise at least one of: the temporary settings; a security certificate for verifying authenticity of the temporary policies; a visual representation of the temporary policies; an image encoded with the temporary policies a barcode; and, a textual representation of the temporary policies.

The processing unit can be enabled to receive the data representative of the temporary policies by at least one of: receiving the data via a camera device at the mobile computing device; receiving the data via a near field communication link; receiving the data via a communication network; receiving the data via an e-mail; and, receiving the data via an input device.

The processing unit can be further enabled to perform, prior to automatically changing settings of the mobile computing device from the original settings to the temporary settings, at least one of: verifying the temporary policies at the mobile computing device;

verifying that the temporary policies are to be implemented at the mobile computing device; providing an indication of the temporary policies at a display of the mobile computing device; receiving input data indicative that the temporary policies are to be implemented at the mobile computing device; and receiving and verifying a password at the mobile computing device.

The processing unit can be further enabled to provide, at a display of the mobile computing device, at least one of: a timer indicative of time remaining in the time period; and an indicator that the temporary policies are in effect at the mobile computing device.

The time period can be infinite and the processing unit can be further enabled to receive temporary policy removal data for triggering the changing the settings back to the original settings.

The processing unit can be further enabled to implement a temporary policy application at the mobile computing device, the temporary policy application for causing the automatically changing settings of the mobile computing device from original settings to temporary settings and the changing the settings back to the original settings when the time period has expired. The data can further comprise the temporary policy application.

The processing unit can be further enabled to: perform at least one of a security wipe and a factory reset at the mobile computing device; and maintain the temporary settings after at least one of the security wipe and the factory reset.

The data can be received from a computing device associated with an organization implementing the temporary policies.

A third aspect of the specification provides a computer program product, comprising a computer usable medium having a computer readable program code adapted to be executed to implement a method for enabling temporary policies in a mobile computing device, the method comprising: receiving data representative of the temporary policies, the data comprising a time period for applying the temporary policies; automatically changing settings of the mobile computing device from original settings to temporary settings, the temporary settings based on the data; and, when the time period has expired, changing the settings back to the original settings.

### BRIEF DESCRIPTIONS OF THE DRAWINGS

Implementations are described with reference to the following figures, in which:

Fig. 1 depicts a block diagram of a system including a mobile computing device for enabling temporary policies, according to non-limiting implementations;

Fig. 2 depicts a flow chart of a method for enabling temporary policies, according to non-limiting implementations;

Fig. 3 depicts a block diagram of a system including a mobile computing device for enabling temporary policies, according to non-limiting implementations;

Fig. 4 depicts a graphical user interface for enabling temporary policies at a mobile computing device, according to non-limiting implementations;

Fig. 5 depicts a block diagram of a system including a mobile computing device for enabling temporary policies, according to non-limiting implementations; and

Fig. 6 depicts a screen of a mobile computing device in which temporary policies are enabled, according to non-limiting implementations.

### DETAILED DESCRIPTION OF THE IMPLEMENTATIONS

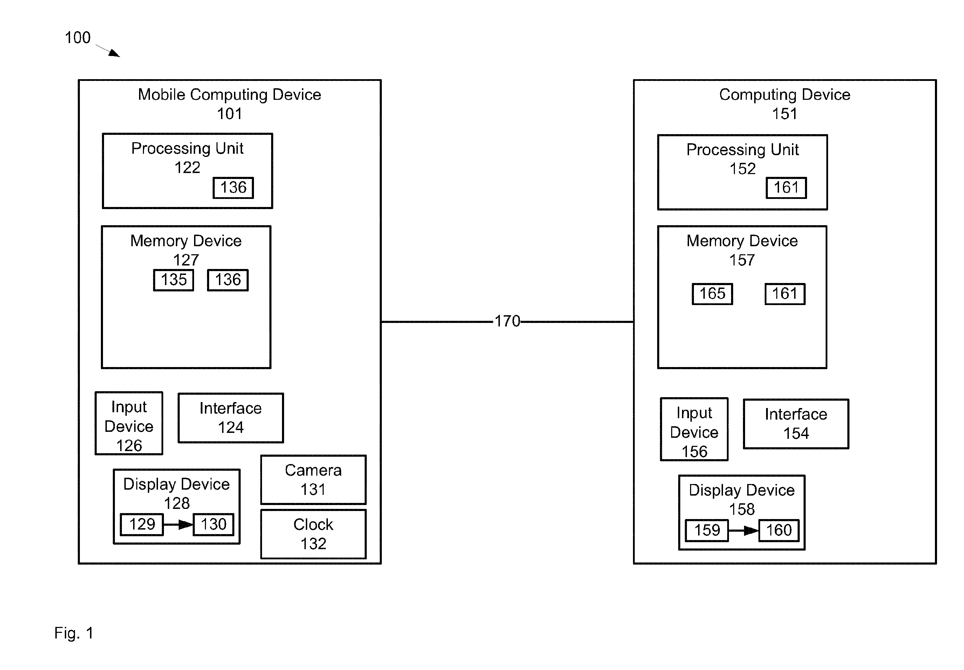

Fig. 1 depicts a system 101 including a mobile computing device 101 on which temporary policies can be implemented, according to non-limiting implementations. Mobile computing device 101, which will also be referred as device 101 hereafter, comprises a processing unit 122 interconnected with a communication interface 124 and a memory device 127, for example via a computing bus (not depicted). Device 101 is further associated with an input device 126 and a display device 128 in communication with device 101, such that input data can be received at processing unit 122 from input device 126, and display device 128 can be controlled by processing unit 122. Display device 128 comprises circuitry 129 for generating a representation 130 of data. As depicted, input device 126 and display device 128 are internal to device 101, however in other implementations, input device 126 and display device 128 can be external to device 101. In some implantations, device 101 can comprise an electronic camera device 131, also referred to hereafter as camera 131. Device 101 is enabled to determine when a given time period has passed, for example via any suitable clock device 132 and/or via communication with a clock device in network (not depicted).

It is appreciated that device 101 comprises settings 135 define how device 101 is to behave. For example, settings 135 can define what type of messages can be received via communication interface 124 (e.g. e-mail messages but not SMS (short message service messages), whether or not camera 131 is enabled or not, or the like. In general, settings 135 can comprise at least one of factory default settings and organizational settings; when settings 135 comprise organizational settings, settings 135 can conform to IT (internet technology) policies set by an entity associated with mobile computing device 101.

Device 101 can further comprise an application 136 which can cause settings 135 to be changed to new settings for a given time period, as will be described below, when application 136 is processed by processing unit 122. Application 136 can be stored in memory device 127 and processed by processing unit 122. Application 136 is described in further detail below.

System 100 further comprises a computing device 151 (also referred to hereafter as device 151) associated with an organization and/or entity that is being visited by device 101. For example, device 101 can be brought to premises associated with an entity not associated with device 101, which will be referred to hereafter as the hosting entity. It is appreciated that the hosting entity will bar device 101 from entering the premises unless device 101 conforms to an IT policy associated with the hosting entity: for example, device 101 can be held by a security guard while a user associated with device 101 is on the premises. However computing device 151, which comprise a processing unit 152 interconnected with a communication interface 154, an input device 156, a memory device 157 and a display device 158 (which in turn comprises circuitry 159 for generating representations 160), also comprises an application 161 for generating data 165 representative of IT policies of the hosting entity, data 165 being transferable to device 101 for implementation thereon, as will be described below. In some implementations, application 161 is stored in memory device 157 for processing by processing unit 152.

Furthermore, while only one set of data 165 is shown in Fig. 1, it is appreciated that the number of sets of data 165 is not particularly limiting and can be more than one. While in depicted implementations, data 165 is stored in memory device 157, it is appreciated that in other implementations application 161 and/or data 16 can be stored remote from device 151 and accessed by device 151 via any suitable wired or wireless link.

In particular data 165 can be representative of specific IT policies of the hosting entity, such as whether or not a camera is to be allowed on premises associated with the hosting entity, what type of messages and/or communications are to be allowed on the premises, or the like.

In some implementations, device 101 and device 151 can be in communication via a link 170, which can be wired or wireless as described below.

In general, device 101 comprises any suitable mobile computing device for processing application 136, including but not limited to any suitable combination of laptop computing devices, portable computing device, mobile electronic devices, PDAs (personal digital assistants), cellphones, smartphones and the like. Other suitable mobile computing devices are within the scope of present implementations.

Processing unit 122 comprises any suitable processor, or combination of processors, including but not limited to a microprocessor, a central processing unit (CPU) and the like. Other suitable processing units are within the scope of present implementations.

Communication interface 124 comprises any suitable communication interface, or combination of communication interfaces. In particular communication interface 124 can be enabled to communicate with device 151 via link 170. Accordingly, communication interface 124 is enabled to communicate according to any suitable protocol which is compatible with link 170, including but not limited to wired protocols, USB (universal serial bus) protocols, serial cable protocols, wireless protocols, cell-phone protocols, wireless data protocols, Bluetooth protocols, NFC (near field communication) protocols and/or a combination, or the like. In some implementations, communication interface 124 can be enabled to communicate with remote computing devices (e.g. servers, other computing devices, other mobile electronic devices, etc.), via any suitable communication network according to any suitable protocol, including but not limited to packet based protocols, Internet protocols, analog protocols, PSTN (public switched telephone network) protocols, WiFi protocols, WiMax protocols and the like, and/or a combination. Other suitable communication interfaces and/or protocols are within the scope of present implementations.

Input device 126 is generally enabled to receive input data, and can comprise any suitable combination of input devices, including but not limited to a keyboard, a keypad, a pointing device, a mouse, a track wheel, a trackball, a touchpad, a trackpad, a touch screen and the like. Other suitable input devices are within the scope of present implementations.

Memory device 127 can comprise any suitable memory device, including but not limited to any suitable one of or combination of volatile memory, non-volatile memory, random access memory (RAM), read-only memory (ROM), hard drive, optical drive, flash memory, magnetic computer storage devices (e.g. hard disks, floppy disks, and magnetic tape), optical discs, and the like. Other suitable memory devices are within the scope of present implementations. In particular, memory device 127 is enabled to store settings 135 and application 136.

Display device 128 comprises circuitry 129 for generating representations of data, for example a representation 130 of application 136 and/or settings 135 and/or new settings. Display device 128 can include any suitable one of or combination of CRT (cathode ray tube) and/or flat panel displays (e.g. LCD (liquid crystal display), plasma, OLED (organic light emitting diode), capacitive or resistive touchscreens, and the like). Circuitry 129 can include any suitable combination of circuitry for controlling the CRT and/or flat panel displays etc., including but not limited to display buffers, transistors, electron beam controllers, LCD cells, plasmas cells, phosphors etc. In particular, display device 128 and circuitry 129 can be controlled by processing unit 122 to generate representation 130.

Camera 131 can comprise any suitable electronic camera device for acquiring digital images, including but limited to a CCD (charge couple device) based camera, any suitable lens(s) or the like. In some implementations, the digital images can be processable by processing unit 122 to extract data there from.

Computing device 151 can comprise any suitable computing device for processing application 161, including but not limited to any suitable combination of a personal computer, a server, a mainframe computer, and any suitable mobile computing device, including but not limited to any suitable combination of laptop computing devices, portable computing device, mobile electronic devices, PDAs (personal digital assistants), cellphones, smartphones and the like. Other suitable computing devices are within the scope of present implementations. Furthermore, processing unit 152, communication interface 154, input device 156, memory device 157 and display device 158 can be similar to, respectively, processing unit 122, communication interface 124, input device 126, memory device 127 and display device 128 describe previously.

Link 170 comprises any suitable link between device 101 and device 151. Link 160 can hence comprise any suitable combination of wired or wireless networks, including but not limited to a cell phone network (1X, UMTS (Universal Mobile Telecommunications System), CDMA (code division multiple access), GSM (Global System for Mobile communications), 3G, EDGE, and the like), a packet based network, the Internet, an analog network, the PSTN (public switched telephone network), a Wi-Fi network, a Wi-Max network and the like. In some implementations, link 170 can comprise an NFC based link.

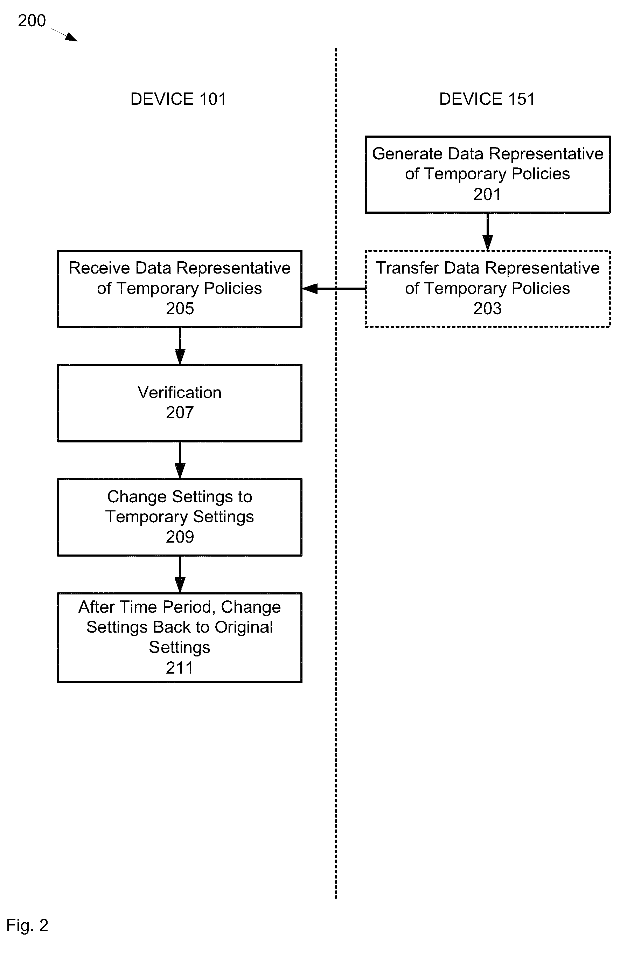

Attention is now directed to Fig. 2 which depicts a method 200 for enabling temporary policies in a mobile computing device. In order to assist in the explanation of method 200, it will be assumed that method 200 is performed using system 100. Furthermore, the following discussion of method 200 will lead to a further understanding of system 100 and its various components. However, it is to be understood that system 100 and/or method 200 can be varied, and need not work exactly as discussed herein in conjunction with each other, and that such variations are within the scope of present implementations.

In particular, it is appreciated that method 200 is implemented at device 101 and device 151. It is further appreciated that device 101 has been transported to a premises associated with a hosting entity and that device 151 is associated with security personnel controlling access to the premises.

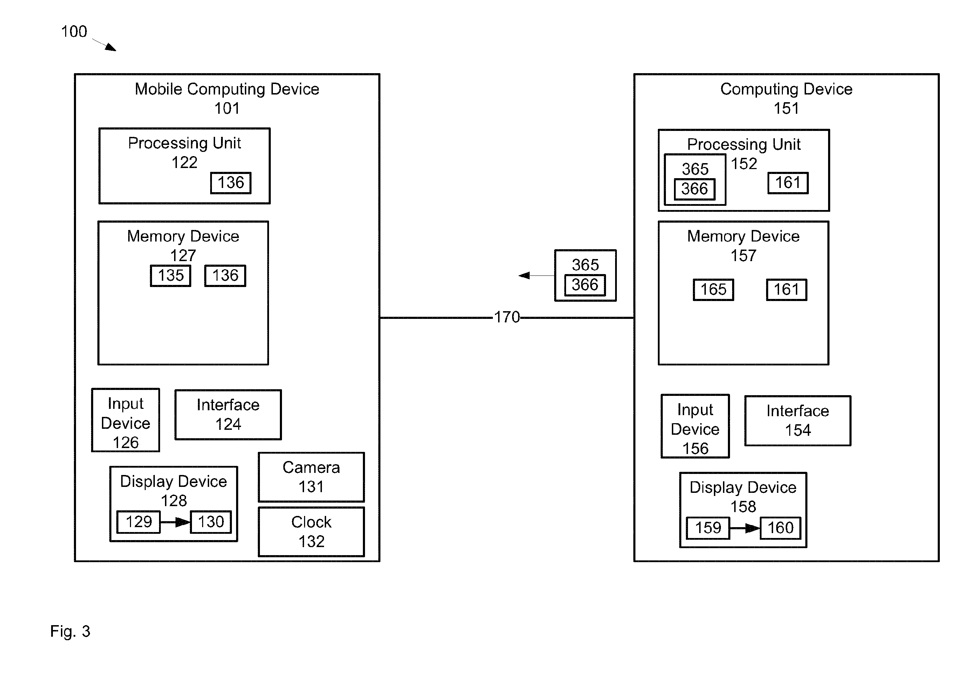

At 201, and with further reference to Fig. 3, data 365 representative of IT policies of the hosting entity is generated at computing device 151. In some implementations, data 365 can comprise data 165, while in other implementations data 365 can be generated from data 165. Data 365 can further be generated via application 161; for example processing unit 152 can process application 161 causing data 365 to be generated. Data 365 can further be generated in a format that is compatible with at least one of device 101 and application 136; in other words, data 365 can include commands and/or data that are compatible with device 101 and/or application 136. In some implementations, data 365 can be specific to a model and/or manufacturer of device 101. In any event, specific rules and/or settings representative of the IT policies can be chosen and/or received via application 161, for example by security personnel interacting with display device 158 and input device 156, via a representation 160 of application 161.

In some implementations, data 365 can further comprise a security certificate for verifying authenticity of the temporary policies so that once data 365 is transferred to device 101, as described below, the temporary policies implemented at device 101 can be audited while device 101 is on the premises. For example, further computing devices can communicate with device 101 to request data regarding the temporary policies implemented on device 101 as well as a data associated with the security certificate in order to audit and confirm that device 101 presently conforms to the IT policies of the hosting entity; further the security certificate can identify device 151 (and/or and associated user, e.g. a security guard)) that generated data 365.

In general, data 365 further comprises a time period 366 that the IT policies are to be applied at device 101; for example, the time period can be received via a field in application 161 and input device 156.

It is appreciated that data 365 is to be transferred from device 151 to device 101 and can be in any suitable format compatible with the method of transfer. Indeed, it is appreciated that, returning to Fig. 2, data 365 is transferred from device 151 to device 101 at 203, such that data 365 is received at device 101 at 205. Any suitable method can be used to transfer data 365 to device 101. For example, data 365 can be transferred using at least one of camera 131, link 170, a near field communication, a communication network, an e-mail, a text message, an SMS message and input device 126. When data 365 is received via camera 131, data 365 can comprise a visual representation of the temporary policies to be implemented in device 101, such as an image encoded with the temporary policies (e.g. a barcode and the like). Hence, in these implementations, the visual representation of data 365 is provided at display device 158, for example representation 158, and camera 131 acquires the visual representation of data 365 at device 101, which is then processed at processing unit 122 to temporarily change settings 135 at device 101. Alternatively, data 365 can comprise a textual representation of the temporary policies and received via an e-mail, SMS message, a near field communication and the like. Hence, in these implementations, device 151 generates data 365 and transmits data 365 to device 101 in a suitable format via link 170. Device 101 receives data 365 where data 365 is processed to at processing unit 122 to temporarily change settings 135 at device 101.

In yet further implementations, data 365 can comprise a textual string representative of the temporary policies generated by application 161, the temporary policies being encoded using any suitable method to produce a textual string of a suitable length, and then conveyed to a user of device 101 for input at input device 126; in these implementations data 365 is received via input device 126. In these implementations, application 161 is enabled to convert the textual string, which can appear meaningless to a general user, to data used to temporarily change settings 135 at device 101.

In any event, regardless of format, at 205, data 365 representative of temporary policies is received at device 101, data 365 comprising time period 366 for applying the temporary policies.

An optional verification can occur at 207. For example, such a verification can include but is not limited to any suitable combination of: verifying the temporary policies at device 101; verifying that the temporary policies are to be implemented at device 101; providing an indication of the temporary policies at display device 128; receiving input data indicative that the temporary policies are to be implemented at device 101; and receiving and verifying a password at device 101. In some implementations verification can further comprise verifying a security certificate included in data 365.

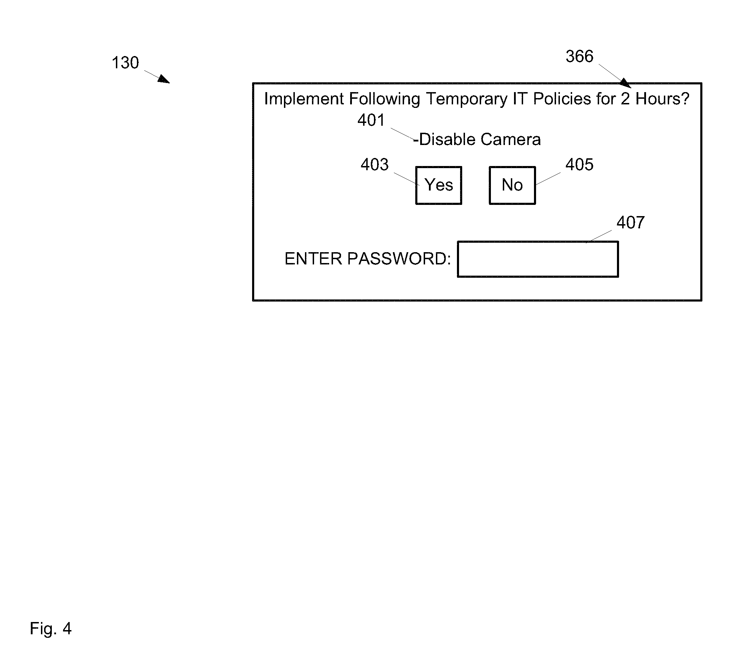

For example, attention is directed to Fig. 4, which depicts representation 130 of application 136, according to non-limiting implementations, which is provided once data 365 is received at device 101. Representation 130 comprises time period 366. Representation further comprises an indication 401 of the temporary policies, which in these implementations are to cause camera device 131 to be disabled for 2 hours. Representation further comprises virtual buttons 403, 405, which can be actuated via input device 126, for indicating whether the policies are to be implemented or not. Representation further comprises a field 407 for receiving a password, receipt of a verifiable password being a condition for implementing the temporary policies in device 101 in some non-limiting implementations.

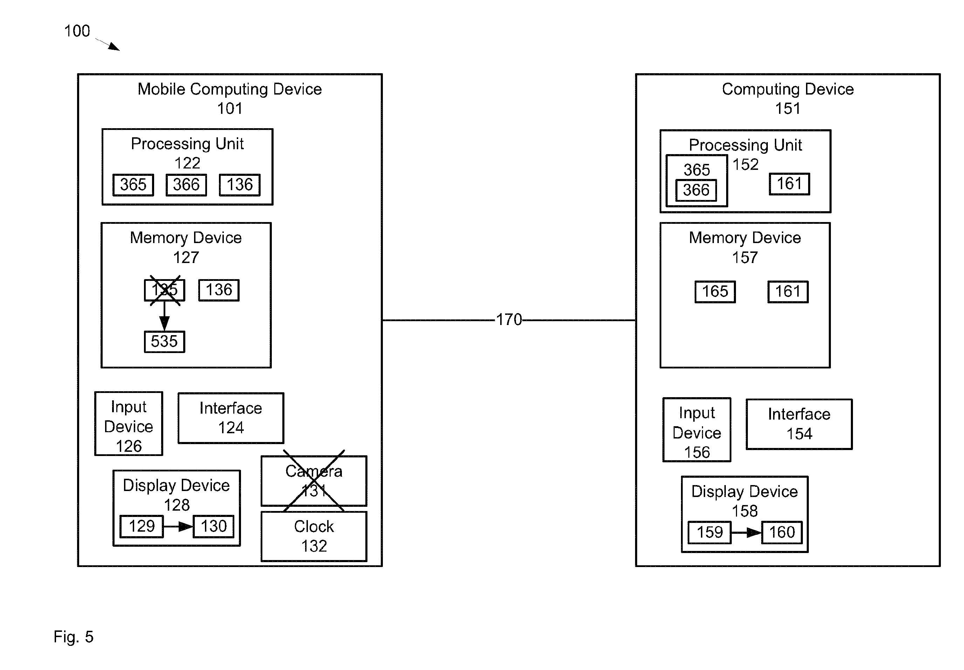

Returning to Fig. 2, at 209, settings of device 101 are then automatically changed from original settings 135 to temporary settings 535, temporary settings 535 based on data 365. For example, in non-limiting implementations depicted in Fig. 5, camera 131 is disabled. Furthermore, it is appreciated that settings 135 are not deleted and/or a record of settings 135 is stored and/or a record of the changes/differences between settings 135 and temporary settings 535 is stored such that settings 135 can be restored.

In any event, the settings of device 101 change from original settings 135 to temporary settings 535 during the time period 366. Once time period 366 has passed, and returning again to Fig.2, the settings of device 101 are changed back to original settings 135. Passing of the time period can be determined from clock device 132 and/or a clock device accessible via interface 124.

In some implementations, 205 to 211 can be implemented in application 136, which can comprise a temporary policy application for causing automatic changing of settings of device 101 from original settings 135 to temporary settings 535 and changing settings back to original settings 135 when time period 366 has expired. In implementations where device 101 does not initially comprise application 136, application 136 can be transferred to and installed at device 101 in data 365 and/or in a further communication between device 151 and device 101. Hence, application 136 need not be preinstalled at device 101 as a prior condition for visiting the premises and/or receiving data 365 at device 101.

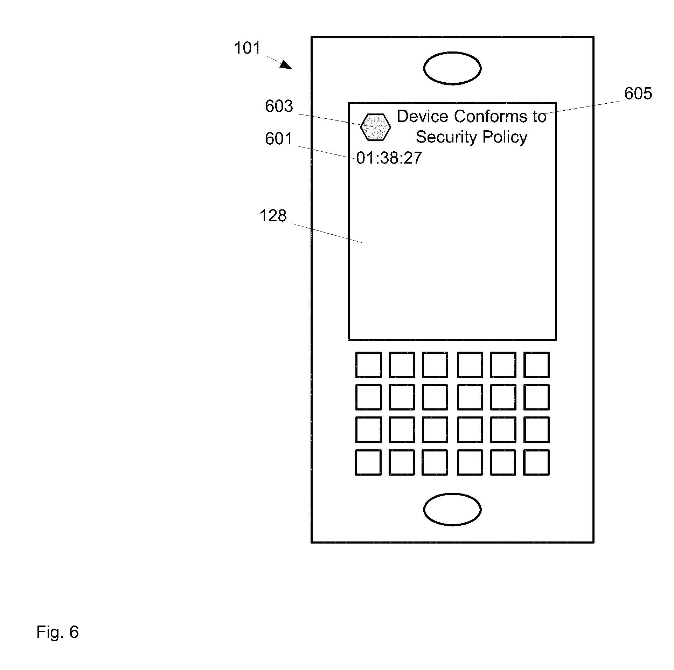

In some implementations, during time period 366, at least one of the following can be provided at display device 128: a timer indicative of time remaining in time period 366; and an indicator that the temporary policies are in effect at device 101. For example, attention is directed to Fig 6 which depicts components of device 101 including display device 128; it is appreciated that provided at display device 128 is a timer 601 that is indicative of the time remaining in time period 366 and an indicator 603 that indicates that the temporary policies are in effect at device 101. While indicator 603 is an octagon, any suitable indicator is within the scope of present implementations, including but not limited to graphic indicators and textual indicators. For example, Fig. 6 further depicts text 605 indicating that the temporary policies are in effect at device 101.

In some implementations, time period 366 is not a sufficient amount of time for temporary settings 365 to be in effect. For example, a user associated with device 101 can be in the premises associated with the hosting entity for meeting scheduled to last two hours, and hence time period 366 is set to two hours. However when the meeting goes overtime, for example to three hours, if device 101 reverts back to original settings 165 at the two hours then device 101 no longer conforms to the IT policy of the hosting entity while it is still on the premises.

To address this, in some implementations, time period 366 can be set to an infinite value and hence time period 366 does not expire. Hence, in order to reset device 101 to original settings 135, device 101 can receive temporary policy removal data, for example from device 151, the temporary policy removal data for triggering 209 of method 200 (i.e. temporary policy removal data triggers changing the settings in device 101 back to original settings 135). The temporary policy removal data can be received at device 101 in a similar or different manner from data 365; however, when data 365 is initially received via camera 131, and changing the settings at device 101 to temporary settings 365 causes camera 131 to be disabled, the temporary policy removal data is received via link 170 and/or input device 126.

For example, the temporary policy removal data can used in implementations where a user brings device 101 to a meeting at premises associated with the hosting entity; a security guard at an entrance to the premises operates device 151 to causes data 365 to be generated at device 151, data 365 comprising an infinite time period, which is then transferred to device 101 thereby causing the settings to be changed to temporary settings 365. Once the user is ready to leave the premises, the security guard operates device 151 to cause the temporary policy removal data to be generated and transferred to device 101, which in turn triggers the settings at device 101 to revert to original settings 165.

Data 165 representative of IT policies of the hosting entity (for example for temporarily disabling a camera of a mobile device (such as camera 131 of device 101)) can be managed using a web portal (not depicted). A subscribing enterprise can access the website and send the temporary IT policy to cause the mobile device to implement the temporary IT policy for a pre-determined length of time, for example to temporarily disable at least a portion of the mobile device for the pre-determined length of time. In some implementations, an interface to the web portal could display all devices wherein a temporary IT policy is currently being implemented, as well as a history showing when the temporary policy was terminated/expired in respective devices, according to any suitable format.

Alternatively, when time period 366 expires, device 101 can be provided with an option to either extend the time period that temporary settings 365 are in effect or request a password to revert to original settings 165. Hence, either time period 366 is extended or a password is received at device 101 in order to cause device 101 to revert to original settings 165. In some implementations where time period 366 is extended, device 101 can notify computing device 151 (or any other suitable device) that time period 366 has been extended using any suitable method (e.g. e-mail, SMS, or the like).

Further, device 101 can be enabled to request a password (e.g. known to a security guard) prior to reverting to original settings 165; when the password is not received, then temporary settings 365 remain in effect. Hence, in these implementations, device 101 undergoes a check-in process when the premises are entered to cause temporary settings 365 to be implemented at device 101 and a check-out process when the premises are exited to cause device 101 to revert to original settings 165.

In some implementations, at least one of a security wipe and a factory reset can be performed at device 101 while temporary settings 365 are in effect, for example in an attempt to wipe temporary settings 365 and revert to original settings 165. However, as a security measure, application 136 causes temporary settings 365 to be maintained after the security wipe and/or factory reset. Furthermore, in some of these implementations, display device 128 can provide a marker which indicates that device 101 has been reset (e.g. via a setting in non-volatile memory and/or memory device 127).

Specific non-limiting implementations are described hereafter.

A visitor arrives at a site, with device 101, the site belonging to an organization he is not a part of. The organization in question (e.g. the hosting entity) requires that all devices allowed onsite conform to a series of IT policies. A security guard either enters the policies on device 151 (e.g. a handheld device or a console device) or uses a predefined set of criteria (e.g. the security guard can be asked to select from a predefined set of criteria or be provided with a predefined set of criteria) to define the temporary consensual IT policy. The amount of time the policy will be valid for is also entered at device 151. There can also be an option for the policy to persist forever at device 101 until the organization removes it.

The security guard then enters his password at device 151. The security guard can have his personal certificate available on device 151 to sign the selections he has made so they may be audited while the visitor is on the premises, as described above.

An encoded image is then displayed on the security guard's handheld / console (e.g. device 151) and/or by a string is displayed which is generated as a result of the policy chosen, password entered, and certificate belonging to the security guard.

The visitor then enters his secure visitor client application on his handheld: this application can be available based on the visitors own IT policy as defined by his organization and/or a user accessible setting on his device. Then, when the application launches, the user can either use camera 131 on device 101 to capture the encoded image, or he can enter the string displayed on the security guard's terminal (i.e. device 151); this is useful if camera 131 has been disabled by the visitors own IT organization.

The visitor is presented, on display device 128, with what was defined by the guard in the temporary consensual IT policy (e.g. as in Fig. 4). The visitor then chooses to accept the policy or reject it. Once the visitor accepts the temporary consensual IT policy they are prompted to enter their password (however, if there is no the previous acceptance can be enough to accept the temporary consensual IT policy).

After accepting the temporary consensual IT policy, device 101 implements the policies as defined by the guard. To ensure that the polices have been accepted the visitors device can display a countdown timer and a list of the temporary policies in a secure area of the lock screen which can be accessible to the underlying security system and is always displayed, and hence can be inspected by a guard at any time.

If at any time the visitor resets device 101 via a security wipe, the temporary consensual IT policy will persist. Similarly, if at any time the visitor resets device 101 to factory settings, device 101 will display an indicator on display device 128 triggered by data that persists in a store in non-volatile memory. This indicator can be used by a guard when auditing device 101.

If the visitor leaves the organization before temporary consensual IT policy expires, or a non-timed policy was used (i.e. time period is infinite), the security guard (or any other suitable personnel) can remove the temporary consensual IT policy as follows: the transaction is called up on device 151; an option to remove the temporary consensual IT policy is selected; using the previous credentials (i.e. the previously used password and certificate) a second encoded image and/or a second string is displayed at device 151; the secure visitor client application is then entered at device 101 and either a picture of the second encoded image is acquired via camera 131, or the second string which was generated is received via input device 126, either of which cause the settings that confirm with the temporary consensual IT policy to be removed from device 101, device 101 reverting to original settings 165.

Hence, by implementing temporary settings that conform to an organization's IT policies at devices that are not associated with the organization, the devices no longer need be disabled and/or confiscated. Rather the devices can be allowed into premises associated with the organization and be enabled to use resources at the premises, such as Wi-Fi hotspots and the like.

Those skilled in the art will appreciate that in some implementations, the functionality of devices 101, 151 can be implemented using pre-programmed hardware or firmware elements (e.g., application specific integrated circuits (ASICs), electrically erasable programmable read-only memories (EEPROMs), etc.), or other related components. In other implementations, the functionality of devices 101, 151 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the implementations, and that the above implementations and examples are only illustrations of one or more implementations. The scope, therefore, is only to be limited by the claims appended hereto.

Embodiments of the present invention may relate to one or more of the following enumerated example embodiments.

1. A method for enabling temporary policies in a mobile computing device (101), the method comprising:
receiving data representative of the temporary policies, the data comprising a time period for applying the temporary policies;
automatically changing settings of the mobile computing device (101) from original settings to temporary settings, the temporary settings based on the data; and, when the time period has expired,
changing the settings back to the original settings.

2. The method of enumerated example embodiment 1, wherein the data further comprises at least one of:
the temporary settings;
a security certificate for verifying authenticity of the temporary policies
a visual representation of the temporary policies;
an image encoded with the temporary policies;
a barcode; and,
a textual representation of the temporary policies.

3. The method of enumerated example embodiment 1 or 2, wherein the receiving the data representative of the temporary policies comprises at least one of:
receiving the data via a camera device (131) at the mobile computing device (101);
receiving the data via a near field communication device (124);
receiving the data via a communication network (170);
receiving the data via an e-mail; and,
receiving the data via an input device (126).

4. The method of any of enumerated example embodiments 1 to 3, further comprising, prior to the automatically changing settings of the mobile computing device (101) from the original settings to the temporary settings, at least one of:
verifying the temporary policies at the mobile computing device (101);
verifying that the temporary policies are to be implemented at the mobile computing device (101);
providing an indication of the temporary policies at a display (128) of the mobile computing device (101);
receiving input data indicative that the temporary policies are to be implemented at the mobile computing device (101); and
receiving and verifying a password at the mobile computing device (101).

5. The method of any of enumerated example embodiments 1 to 4, further comprising providing, at a display (128) of the mobile computing device (101), at least one of:
a timer indicative of time remaining in the time period; and
an indicator that the temporary policies are in effect at the mobile computing device (101).

6. The method of any of enumerated example embodiments 1 to 5, wherein the time period is infinite and the method further comprises receiving temporary policy removal data for triggering the changing the settings back to the original settings.

7. The method of any of enumerated example embodiments 1 to 6, further comprising implementing a temporary policy application at the mobile computing device (101), the temporary policy application for causing the automatically changing settings of the mobile computing device (101) from original settings to temporary settings and the changing the settings back to the original settings when the time period has expired.

8. The method of enumerated example embodiment 7, wherein the data further comprises the temporary policy application.

9. The method of any of enumerated example embodiments 1 to 8, further comprising:
performing at least one of a security wipe and a factory reset at the mobile computing device (101); and
maintaining the temporary settings after at least one of the security wipe and the factory reset.

10. The method of any of enumerated example embodiments 1 to 9, wherein the data is received from a computing device (151) associated with an organization implementing the temporary policies.

11. A mobile computing device (101) for enabling temporary policies, the mobile computing device (101) comprising:
a processing unit (122) interconnected with a memory device (127) and a communication interface (124), the processing unit (122) enabled to implement any of the steps of the method of enumerated example embodiments 1 to 10.

12. A computer program product, comprising a computer usable medium having a computer readable program code adapted to be executed to implement any of the steps of the method of enumerated example embodiments 1 to 10.

## Claims

1. A method for enabling temporary policies in a mobile computing device (101), said method comprising:
receiving data representative of said temporary policies via a camera device (131) at said mobile computing device (101), said data comprising an image encoded with said temporary policies and a time period for applying said temporary policies;
automatically changing settings of said mobile computing device (101) from original settings to temporary settings, said temporary settings based on said data; and, when said time period has expired,
changing said settings back to said original settings.

2. The method of claim 1, wherein said image comprises at least one of: a visual representation of said temporary policies; and a barcode.

3. The method of any of claims 1 to 2, further comprising, prior to said automatically changing settings of said mobile computing device (101) from said original settings to said temporary settings, providing an visual indication of said temporary policies at a display (128) of said mobile computing device (101).

4. The method of any of claims 1 to 3, further comprising providing, at a display (128) of said mobile computing device (101), at least one of:
a timer indicative of time remaining in said time period; and
an indicator that said temporary policies are in effect at said mobile computing device (101).

5. The method of any of claims 1 to 4, wherein said time period is infinite and said method further comprises receiving temporary policy removal data for triggering said changing said settings back to said original settings.

6. The method of any of claims 1 to 5, further comprising implementing a temporary policy application at said mobile computing device (101), said temporary policy application for causing said automatically changing settings of said mobile computing device (101) from original settings to temporary settings and said changing said settings back to said original settings when said time period has expired.

7. The method of any of claims 1 to 6, further comprising:
performing at least one of a security wipe and a factory reset at said mobile computing device (101); and
maintaining said temporary settings after at least one of said security wipe and said factory reset.

8. The method of any of claims 1 to 7, wherein said data is received from a computing device (151) associated with an organization implementing said temporary policies.

9. A mobile computing device (101) for enabling temporary policies, said mobile computing device (101) comprising:
a processing unit (122) interconnected with a memory device (127) and a communication interface (124), said processing unit (122) enabled to implement any of the steps of the method of claims 1 to 8.

10. A computer program product, comprising a computer usable medium having a computer readable program code adapted to be executed to implement any of the steps of the method of claims 1 to 8.
